# EUROPÄISCHE PATENTANMELDUNG

(11) **EP 4 751 821 A1**
(43) Veröffentlichungstag der Anmeldung: **03.06.2026**
(21) Anmeldenummer: 25215467.9
(22) Anmeldetag: 13.11.2025
(51) Int. Cl.: B21D 22/10, B21D 53/26, B21D 53/30, B21D 35/00, B21D 22/16, B21D 26/049

(54) **VERFAHREN ZUM HERSTELLEN EINES EINSTÜCKIGEN FAHRZEUGRADS**

(30) Priorität: 28.11.2024 DE 102024135329
(71) Anmelder: KRONPRINZ Solingen GmbH, 42697 Solingen (DE)
(72) Erfinder: Schumacher, Jörg, 41844 Wegberg (DE); Nowitzki, Dirk, 51515 Kürten (DE); George, Dominique, 42659 Solingen (DE)
(74) Vertreter: Bösherz Goebel Patentanwälte

(57) **Zusammenfassung**

Die Erfindung betrifft ein Verfahren (100) zum Herstellen eines einstückigen Fahrzeugrads (1), wobei das Fahrzeugrad (1) ein Schüsselsegment (2) und ein Felgensegment (3) aufweist, und wobei das Verfahren (100) umfasst:
- Bereitstellen (101) einer einstückigen Vorform (4) aus metallischen Material, insbesondere einer Ronde (4) aus metallischen Material oder einer Bandage (4) aus metallischen Material, wobei das metallische Material durch eine Materialgüte und/oder eine Materialdicke spezifiziert ist,
- Formen (102) eines Topfes (5) aus der bereitgestellten einstückigen Vorform (4), wobei der Topf (5) das Schüsselsegment (2) und das Felgensegment (3) umfasst,
- Profilieren (103) des Schüsselsegments (2) und/oder des Felgensegments (3) des einstückigen Fahrzeugrads (1) hinsichtlich einer jeweiligen Materialdicke in verschiedenen Bereichen der jeweiligen Segmente (2,3) auf Basis eines Kaltumformungsverfahrens, insbesondere auf Basis eines Flow-Forming-Verfahrens.

## Beschreibung

Die vorliegende Erfindung betrifft ein Verfahren zum Herstellen eines einstückigen Fahrzeugrads. Ferner bezieht sich die Erfindung auf ein Fahrzeugrad sowie eine Vorrichtung zu diesem Zweck.

### Stand der Technik

Fahrzeugräder stellen eine wichtige Komponente für eine sichere und effiziente Fortbewegung eines Fahrzeugs dar, insbesondere solche für Personenkraftwagen und Nutzfahrzeuge. Die Herstellung von Fahrzeugrädern erfolgt dabei in der Regel durch etablierte Verfahren, die auf unterschiedlichen Technologien basieren und den Anforderungen hinsichtlich Gewicht, Festigkeit, Langlebigkeit und Fertigungskosten Rechnung tragen.

Ein bekanntes Verfahren zur Herstellung von Fahrzeugrädern ist beispielsweise das Schmiedeverfahren. Dabei wird ein Aluminium- oder Stahlrohling unter hohem Druck in die gewünschte Form gepresst. Das Schmiedeverfahren zeichnet sich durch die hohe Festigkeit und Belastbarkeit der erzeugten Bauteile aus. Nachteilig ist jedoch der hohe Energieaufwand und die damit verbundenen Kosten. Ferner ist z. B. das sogenannte Gießverfahren bekannt, insbesondere das Niederdruckgießen, wird häufig zur Herstellung von Aluminiumrädern eingesetzt. Hierbei wird flüssiges Aluminium in eine Form gegossen und anschließend kontrolliert abgekühlt. Durch den Einsatz von modernen Gießtechnologien können komplexe Geometrien realisiert werden. Allerdings können beim Gießen poröse Strukturen entstehen, die eine zusätzliche Nachbearbeitung oder Wärmebehandlung erforderlich machen, um die Material-eigenschaften zu verbessern. Schließlich wird oftmals ein sogenanntes Flow-Forming-Verfahren bei der Herstellung von Fahrzeugrädern für Personenkraftwagen und/oder Nutzfahrzeugen angewendet. Dabei wird ein Radrohling unter gleichzeitiger Rotation und Krafteinwirkung bearbeitet, um die gewünschte Endform und Materialdicke zu erreichen. Dieses Verfahren kann insbesondere bei der Herstellung von hochbelastbaren Rädern zum Einsatz kommen.

Neuere Entwicklungen zeigen den möglichen Einsatz additiver Fertigungsverfahren (z. B. 3D-Druck) zur Herstellung von Prototypen oder Spezialrädern. Diese Verfahren ermöglichen die Produktion von hochkomplexen Geometrien und die Individualisierung der Räder. Aufgrund der langen Produktionszeiten und hohen Kosten findet die additive Fertigung derzeit jedoch nur sehr begrenzt Anwendung in der Massenproduktion.

Der ETRTO-Standard (European Tyre and Rim Technical Organisation) definiert technische Spezifikationen für Reifen und Felgen für Personenkraftwagen und für Nutzfahrzeuge, insbesondere hinsichtlich ihrer Dimensionierung, Toleranzen, Ventilanbindungen und Montageanforderungen. Ziel des Standards ist es, die Interoperabilität und Sicherheit von Reifen und Felgen sicherzustellen, unabhängig von deren Hersteller. Insbesondere regelt der ETRTO-Standard geometrische Parameter wie Felgenmaulbreite, Felgenhöhe, Profilkonturen und Montagewinkel, die maßgeblich für die Kompatibilität von Reifen und Felgen sind. Im Bereich der Herstellungsverfahren von Fahrzeugrädern für Pkw und Nutzfahrzeuge hat der ETRTO-Standard indirekte, jedoch bedeutende Auswirkungen. Zum einen beeinflussen die vorgegebenen Spezifikationen die konstruktiven Anforderungen, die bei der Gestaltung der Felgen berücksichtigt werden müssen. Zum anderen wirken sich diese Anforderungen auf die Wahl der Fertigungsmethoden aus, wie beispielsweise beim Schmieden, Gießen oder Walzen von Felgen, da bestimmte Geometrien und Toleranzen präzise eingehalten werden müssen, um die Normkonformität sicherzustellen. Ferner haben technologische Fortschritte in der Herstellung von Fahrzeugrädern zur Entwicklung von innovativen Fertigungsverfahren geführt, welche die Einhaltung des ETRTO-Standards gewährleisten können.

Trotz der bestehenden Standardisierung bietet der Stand der Technik Spielraum für Innovationen, insbesondere hinsichtlich der Verbesserung der Fertigungsgenauigkeit, der Materialausnutzung und der Anpassung an spezifische Einsatzanforderungen, wie z. B. bei Rädern für Elektrofahrzeuge oder Spezialnutzfahrzeuge. Solche Entwicklungen zielen darauf ab, sowohl die Standardanforderungen zu erfüllen als auch zusätzliche Eigenschaften, wie eine erhöhte Energieeffizienz oder eine verbesserte Belastbarkeit, zu erzielen.

Fahrzeugräder in Stahlbauweise bestehen bekannterweise aus einer Felge und einer an der Felge angeordneten Radschüssel. Die Radschüssel wird beispielsweise bei Nutzfahrzeugrädern mit leichtem Übermaß in die Felge gepresst und dann dauerhaft mit einer umlaufenden (teilweise unterbrochenen) Schweißnaht verbunden. Die Radschüssel wird entweder in der Felge im Abschnitt eines Übergangsbereichs, dem sogenannten Ledge (zylindrischer Übergangsbereich zwischen Felgenschulter und Tiefbett) oder direkt im Tiefbett angebunden. Um dies zu erreichen, verlaufen die Konturen der Felge und Schüssel in axialer Richtung von der Radaußenseite bis zur Schweißnaht nebeneinander, was zu höherem Materialeinsatz und zu einer Art Spalt zwischen beiden Teilen führt. Der sich zwischen Radschüssel und Felgenkontur ergebende Spalt verschlechtert oftmals die Aerodynamik des Fahrzeugrads. Im Rahmen der aerodynamischen Optimierung nutzen deshalb einige Fahrzeughersteller Radkappen, um durch die vollflächige Abdeckung des Rades die Aerodynamik des Rades zu verbessern.

Es sind auch Bauformen mit einer Schüssel- und Felgenverbindung im äußeren Schulterbereich bekannt. Diese haben allerdings den deutlichen Nachteil, dass sich die Passform beider Teile aufgrund der Schulterschrägen von 5° bzw. 15° nur mit hohem Aufwand produzieren lässt und auch hier die Materialüberlappungen zu erhöhtem Materialaufwand und Mehrgewicht des Rades führen.

Nachteilig ist bei den bekannten Herstellungsverfahren, dass weiterhin Herausforderungen in der weiteren Gewichtsreduktion, der Kostenoptimierung sowie der Integration neuer Materialtechnologien bestehen, die für innovative Verfahren Raum bieten.

Es ist eine Aufgabe der vorliegenden Erfindung, die voranstehend beschriebenen Nachteile des Stands der Technik zumindest teilweise zu beheben. Insbesondere ist es Aufgabe der vorliegenden Erfindung, ein verbessertes Verfahren zum Herstellen eines Fahrzeugrads bereitzustellen.

### Offenbarung der Erfindung

Gegenstand der Erfindung ist ein Verfahren mit den Merkmalen des Anspruchs 1, ein Fahrzeugrad mit den Merkmalen des Anspruchs 16 sowie eine Vorrichtung mit den Merkmalen des Anspruchs 17. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeugrad sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren zum Herstellen eines einstückigen Fahrzeugrads, wobei das Fahrzeugrad ein Schüsselsegment und ein Felgensegment aufweist, und wobei das Verfahren umfasst:
- Bereitstellen einer einstückigen Vorform aus metallischen Material, insbesondere einer Ronde aus metallischen Material oder einer Bandage aus metallischen Material, wobei das metallische Material durch eine Materialgüte und/oder eine Materialdicke spezifiziert ist,
- Formen eines Topfes aus der bereitgestellten einstückigen Vorform, wobei der Topf das Schüsselsegment und das Felgensegment umfasst,
- Profilieren des Schüsselsegments und/oder des Felgensegments des einstückigen Fahrzeugrads hinsichtlich einer jeweiligen Materialdicke in verschiedenen Bereichen der jeweiligen Segmente auf Basis eines Kaltumformungsverfahrens, insbesondere auf Basis eines Flow-Forming-Verfahrens.

Dies hat den Vorteil, dass die Produzierbarkeit des einstückigen Fahrzeugrads deutlich vereinfacht und verbessert wird, indem eine einteilige Vorform aus metallischen Material verwendet wird, die dann jeweils zu einem Schüssel- und einem Felgensegment des einstückigen Fahrzeugrads geformt wird. Durch das Profilieren der jeweiligen Segmente kann eine variable Materialdicke erreicht werden, um die gewünschten und/oder erforderlichen Anforderungen, beispielsweise des ETRTO-Standards, zu erfüllen. Ferner wird so die Stabilität und Festigkeit des Fahrzeugrads für einen sicheren Betrieb gewährleistet.

Ein weiterer Vorteil kann im Rahmen der Erfindung erzielt werden, wenn nach dem Formen des Topfes der Durchmesser des Felgensegments einem vorgegebenen Durchmesser eines Felgentiefbetts des Fahrzeugrads entspricht, und wobei das Verfahren weiter umfasst:
- Ausformen eines Übergangsbereichs des Fahrzeugrads mittels eines Wirkmediums in einem Werkzeug zur Herstellung des Fahrzeugrads,
wobei das Wirkmedium in Abhängigkeit eines kontrolliert erzeugten Drucks so gegen eine Negativform des Werkzeugs gedrückt wirkt, dass der Übergangsbereich auf Basis einer vorgegebenen Spezifikation einer Kontur des Fahrzeugrads ausgebildet wird, wobei der Übergangsbereich als ein Bereich des Fahrzeugrads spezifiziert ist, welcher zwischen einer Radanlagefläche des Schüsselsegments und einer äußeren Felgenschulter des Felgensegments, vorzugsweise einem äußeren Felgenhorn des Felgensegments, angeordnet ist.

Dies ermöglicht, dass das einstückige Fahrzeugrad eine kontinuierlich verlaufende Kontur im Übergangsbereich des Fahrzeugrads aufweist, die sowohl den Anforderungen an die Aerodynamik als auch an die Funktionalität des Rades entspricht, wie es für Personenkraftwagen oder für Nutzfahrzeuge erforderlich ist. Ferner ermöglicht dies, dass eine hohe Flexibilität bei der Formgebung von einstückigen Fahrzeugrädern gewährleistet wird, da das Ausformen kostengünstiger und schneller anzupassen ist. Ferner wird das Ausformen des Übergangsbereichs mittels des eingesetzten Wirkmediums deutlich verbessert, da die Kontur des Fahrzeugrads im Übergangsbereich präziser und schneller hergestellt werden kann. Ferner hat dies den Vorteil, dass der Übergangsbereich durch eine spezielle Oberflächengestaltung der Kontur so optimiert werden kann, dass die Aerodynamik verbessert wird. Zudem können vorteilhafterweise durch die Flexibilität und Anpassungsfähigkeit des Wirkmediums schwierige und unregelmäßige Geometrien gefertigt werden, die mit starren Werkzeugen nur schwer oder gar nicht realisierbar wären.

Ein Wirkmedium ist im Rahmen dieser Erfindung als ein Medium zu verstehen, das in einem Umformprozess eingesetzt wird, um durch Druck oder andere physikalische Einflüsse auf das Werkstück wie z.B. eine Vorform aus metallischem Material oder einen zylindrischen Topf aus metallischem Material einzuwirken und es in eine bestimmte Form wie z.B. ein Fahrzeugrad zu bringen. In der Herstellung des Fahrzeugrads, insbesondere des Schüssel- und/oder Felgensegments, kann ein Wirkmedium verwendet werden, um das Material zu formen und eine gleichmäßige Kraftverteilung sicherzustellen.

Typische Wirkmedien können dabei einerseits Öl, Wasser oder eine Mischung aus Öl und Wasser sein. Dabei kommen dieses Wirkmedien beispielsweise bei einer sogenannten Innenhochdruckumformung (IHU) zur Anwendung. Bei IHU-Verfahren oder auch Hydroforming wird ein flüssiges Medium wie Öl oder Wasser unter sehr hohem Druck in ein vorgeformtes Werkstück gepresst. Dadurch wird das Material gegen die Formwand (Matrize) gedrückt und nimmt die Konturen der Form an.

Andererseits kann ein elastisches Medium wie z.B. ein Elastomer, oder ein vergleichbarer elastischer Kunststoff zur Anwendung kommen. Dieses elastische Medium wirkt nach dem gleichen Prinzip wie beim flüssigen Wirkmedium auf das Material des herzustellenden Fahrzeugrads ein und verformt dieses durch den kontrolliert erzeugten Druck.

Dieses Prinzip entspricht dabei dem Guerin-Verfahren, welches ein flexibles Gummikissen als Wirkmedium verwendet, das das Material beim Pressen gleichmäßig gegen eine starre Form drückt. Das Gummikissen wirkt dabei als anpassungsfähiges Medium, das sich dem Werkstück anpasst und so gleichmäßig Druck auf das Material ausübt. Daher fanden sich diese Technologien bislang kaum in der Felgenherstellung, da hier die Festigkeitsanforderungen und die Präzision höher eingeschätzt werden. In der Felgenherstellung wurden daher nach langjähriger Experteneinschätzung solche Wirkmedien in flüssiger oder elastischer Form (wie in IHU oder Guerin-Verfahren) nicht eingesetzt, da Felgen hohe strukturelle Anforderungen erfüllen müssen. Versuche mit den in dieser Erfindung eingesetzten Wirkmedien haben überraschenderweise gezeigt, dass diese bei dem erfinderischen Herstellungsverfahren vorteilhafterweise hinsichtlich Präzision, Sicherheit und Effizienz, auch der Kosteneffizienz anwendbar sind.

Es ist optional denkbar, dass die Vorform aus metallischem Material ein nahtloses Rohr aus metallischem Material aufweist. Das Rohr kann sodann für das herzustellende Fahrzeugrad passend zugeschnitten werden und stellt dann quasi die Vorform dar.

Dann kann im Rahmen der Herstellung des Fahrzeugrads der Außendurchmesser, die Wanddicke und die Länge des Rohrs werden so gewählt, dass sie den Grundanforderungen des fertigen Fahrzeugrads entsprechen. In diesem Schritt kann der Querschnitt des Rohrs noch angepasst werden, indem z. B. die gewünschte Kontur für das Felgen- und Schüsselsegment des Fahrzeugrads erzeugt wird. Das Rohr kann weiter beispielsweise durch Rotationsumformen oder Walzen weiter ausgeformt werden. Je nach Fahrzeugraddesign können komplexe Muster z. B. durch Laserschneiden erzeugt werden, insbesondere bei Leichtbauanwendungen. Auf der Grundlage eines Innenhochdruckumformungsverfahrens (IHU) kann das Rohr in eine Matrize eingelegt werden, und mittels eines flüssigen Wirkmediums wird das Material gegen die Matrizenwand gedrückt, um Felgen- und Schüsselsegment des Fahrzeugrads zu formen. Dabei ermöglicht dieses Verfahren besonders für die Herstellung einstückiger, nahtloser Fahrzeugräder. Alternativ kann z.B. das Schüsselsegment durch Drückwalzen erzeugt werden, wobei Material aus dem Rohr gezogen und gleichmäßig verteilt werden kann. Dies ermöglicht eine präzise Steuerung der Materialdicke und eine höhere Materialfestigkeit durch Kaltverfestigung. Weitere Vorteile bei dieser Methode sind, dass das fertige Fahrzeugrad keine Schweißnähte oder Verbindungsstellen umfasst, was die strukturelle Integrität und Festigkeit des Fahrzeugrads erhöht, und, dass verschiedene Rohrvorformen vielseitig nutzbar sind und für unterschiedliche Designs und Anwendungen angepasst werden können.

Es ist weiter denkbar, dass ein Teil des erfinderischen Verfahrens auf Basis einer Warmumformung vorgesehen ist, welche in Kombination mit anderen Umformungsverfahren angewendet wird. Dabei ist ferner vorgesehen, dass diese Art der Umformung oberhalb einer jeweiligen Rekristallisationstemperatur eines jeweils verwendeten Metalls abläuft. Die Warmumformung eignet sich vorteilhafterweise für Bauteile, die hohen Belastungen standhalten müssen wie z.B. Fahrzeugräder. Verfahren der Warmumformung können beispielsweise Schmieden, Warmwalzen oder Formhärten sein.

Als Rekristallisationstemperatur kann diejenige Temperatur bezeichnet werden, bei der ein z.B. ein Metall innerhalb einer bestimmten Betrachtungszeit vollständig rekristallisiert. Sie wird häufig als Faustregel mit 40 % oder 50 % der absoluten Schmelztemperatur des jeweiligen Metalls abgeschätzt. Rekristallisation ist ein Begriff aus der Metallkunde und Kristallographie und beschreibt den Abbau von Gitterfehlern in Kristalliten durch Gefügeveränderungen in Folge von Keimbildung und Kornwachstum. Er geht mit einer Festigkeitsabnahme und üblicherweise einer Kornfeinung einher. Voraussetzung sind durch die Umformung eingebrachte Versetzungen, als Keime für die Kristallitneubildung. Wenn die Umformung oberhalb der Rekristallisationstemperatur abläuft, kann eine dynamische Rekristallisation des jeweiligen Metalls beobachtet werden.

Optional ist es denkbar, dass das Verfahren vor dem Ausformen des Übergangsbereichs weiter umfasst:
- Einlegen des Topfes in das Werkzeug für ein weiteres Ausformen der jeweiligen Segmente des Fahrzeugrads, wobei das Werkzeug horizontal oder vertikal geteilt ist, und wobei das jeweilige geteilte Werkzeug als eine Negativform für das Ausformen des Übergangsbereichs vorgesehen ist.

Dies ermöglicht eine einfachere Handhabung des Topfes aufgrund seiner beispielsweise zylindrischen bzw. rotationssymmetrischen Geometrie wie bei Fahrzeugrädern, da sie den Rohling in seiner natürlichen horizontalen Ausrichtung fixieren können. Die Teilung erlaubt eine präzise Ausrichtung und Umformung des Fahrzeugrads. Ferner haben horizontale Teilungen von Werkzeugen den Vorteil, dass eine kompaktere Bauweise der Maschine ermöglicht wird, was Platz in der Fertigung spart.

Die vertikale Teilung erleichtert die exakte Zentrierung des Werkstücks, was besonders wichtig ist bei rotationssymmetrischen Bauteilen wie Felgen, um Unwuchten zu vermeiden. Ferner lassen sich vertikal geteilte Werkzeuge vorteilhafterweise leichter in mehrstufige Produktionslinien integrieren, da der Zugriff von beiden Seiten möglich ist. Große und schwere Werkstücke können einfacher gehandhabt werden, da sie in der vertikalen Positionierung durch die Schwerkraft unterstützt werden.

Ein weiterer Vorteil kann im Rahmen der Erfindung erzielt werden, wenn beim Ausformen des Übergangsbereichs in dem vertikal geteilten Werkzeug, das Wirkmedium in Abhängigkeit des kontrolliert erzeugten Drucks so in horizontaler Richtung beidseitig gedrängt wird, dass der Übergangsbereich des Topfs gegen die Negativform des vertikal geteilten Werkzeugs gedrückt wird, und das Verfahren wenigstens einen der nachfolgenden Schritte weiter umfasst:
- Nachführen des Wirkmediums zur Unterstützung des Ausformens des Übergangsbereichs,
- Abstützen eines offenen Endes des Felgensegments, um ein Ausknicken oder Aufbauchen des Felgensegments zu vermeiden.

Auf diese Weise kann das Verfahren zum Herstellen eines einstückigen Fahrzeugrads eine exakte Steuerung der Ausformung des Übergangsbereichs ermöglichen, um sicherzustellen, dass dieser Bereich durch ein Expandieren des Wirkmediums gegen die Negativform des vertikal geteilten Werkzeugs gedrückt wird. Durch das Nachführen des Wirkmediums und das Abstützen des offenen Endes des Felgensegments kann eine präzise Kontrolle der Ausformung des Übergangsbereichs erreicht werden, um ein Ausknicken oder Aufbauchen des Felgensegments des Topfs zu vermeiden. Ein Nachführen bezeichnet eine kontrollierte, gerichtete Zuführung oder Bewegung eines Wirkmediums oder einer Komponente oder eines Materials als Reaktion auf einen definierten Prozessparameter wie beispielsweise einen Druck, wobei die Zuführung durch einen oder mehrere Mechanismen kontinuierlich oder schrittweise angepasst wird. Die Steuerung kann durch hydraulische, pneumatische, mechanische, elektromagnetische, thermische oder softwarebasierte Mittel, allein oder in Kombination, realisiert werden. Das Nachführen oder die kontrollierte, gerichtete Zuführung" erfordert nicht, dass das Bauteil physisch an einem Transportmechanismus befestigt ist; sie umfasst auch die gezielte Gestaltung eines Druckgradienten, die bewirkt, dass das Wirkmedium einem vorgegebenen Weg folgt.

Jedes Verfahren gemäß der vorliegenden Erfindung, welches (i) das Wirkmedium in die Übergangszone einbringt, (ii) einen gerichteten Einfluss wie z.B. eine(n) Druck, Strömung, Wärme, Schall oder Elektromagnetismus ausübt und (iii) mindestens ein Rückkopplungselement verwendet, um den Einfluss in Echtzeit anzupassen, fällt im Sinne der Ansprüche unter den Begriff Nachführen des Wirkmediums, insbesondere geführte Zufuhr des Wirkmediums.

Nach einer weiteren Möglichkeit kann vorgesehen sein, dass das Verfahren beim Ausformen des Übergangsbereichs in dem horizontal geteilten Werkzeug weiter umfasst:
- Befüllen des Topfes mit dem Wirkmedium,
- Verschließen des Topfes am offenen Ende des Felgensegments mittels einer Verschlussvorrichtung,
- Ausüben des kontrolliert erzeugten Drucks auf das Wirkmedium mittels einer Druckvorrichtung, um das Wirkmedium gegen den Übergangsbereich und diesen Bereich in die Negativform des horizontal geteilten Werkzeugs zu drücken,
- Nachführen der Verschlussvorrichtung in Abhängigkeit einer Ausbreitung des Wirkmediums durch den kontrolliert erzeugten Drucks auf das Wirkmedium.

Auf diese Weise kann das Verfahren zum Herstellen eines einstückigen Fahrzeugrads eine exakte Steuerung der Ausformung des Übergangsbereichs ermöglichen, um sicherzustellen, dass dieser Bereich gegen die Negativform des horizontal geteilten Werkzeugs gedrückt wird. Durch das Nachführen der Verschlussvorrichtung kann eine präzise Kontrolle der Ausformung des Übergangsbereichs erreicht werden. Das Formen von Fahrzeugrädern mittels flüssigen oder elastischen Wirkmedien ermöglicht eine Gewährleistung von gleichmäßiger Druckverteilung des Wirkmediums auf den Übergangsbereich und/oder einer Materialschonung des Materials des Übergangsbereichs.

Ferner ermöglicht das Nachführen der Verschlussvorrichtung, insbesondere eines Schließzylinders, dass diese von dem Rand des Topfes nachfolgen sollte, d.h. die Verschlussvorrichtung wird nachgeführt, um den Druck des Wirkmediums aufzubauen bzw. aufrechtzuerhalten.

Das Nachführen der Verschlussvorrichtung bezeichnet eine kontrollierte Positionierung, Verschiebung oder Betätigung der Verschlussvorrichtung in einer Weise, die dynamisch mit der räumlichen Ausbreitung des Wirkmediums verbunden ist, wobei die Ausbreitung selbst durch einen kontrollierbar ausgeübten, Druck auf das Wirkmedium erzeugt wird. Dieses Nachführen kann beispielsweise durch einen Druck, oder Wärme, oder Elektromagnetismus ausgeübt werden. Jedes Verfahren gemäß der vorliegenden Erfindung, welches (i) den räumlichen Vorschub des Wirkmediums erfasst, (ii) einen kontrollierten Druck auf das Medium ausübt und (iii) die Verschlussvorrichtung in einer Weise bewegt, die funktional abhängig vom erfassten Vorschub ist, wird unter dem Begriff Nachführen der oder geführte Zuführung der Verschlussvorrichtung zusammengefasst. Die Abhängigkeit kann dabei linear, nichtlinear, schrittweise oder ereignisgesteuert sein, und die Betätigung kann kontinuierlich oder diskret erfolgen.

Von weiterem Vorteil kann vorgesehen sein, dass das Wirkmedium eine flüssige Form und/oder eine elastische Form aufweist, wobei vorzugsweise die flüssige Form Wasser, und/oder vorzugsweise die elastische Form einen elastischen Kunststoff, insbesondere ein Elastomer, umfasst.

Dies ermöglicht es, dass bei flüssigen Formen wie Flüssigkeiten wie Öl oder Wasser der Druck gleichmäßig auf die gesamte Oberfläche des Werkstücks verteilt wird, unabhängig von der Werkzeuggeometrie. Dies reduziert das Risiko von lokalen Verformungen, Rissen oder Materialversagen des herzustellenden Fahrzeugrads. Dies ermöglicht beispielsweise eine Innenhochdruckumformung (IHU) für die Formung des Fahrzeugrads, welche eine präzise Verformung ermöglicht. Ferner wird bei Flüssigkeits-basierten Umformverfahren wie der Innenhochdruckumformung das Material gegen eine bestehende Formwand als Negativform gedrückt, sodass weniger komplexe Werkzeuge notwendig sind.

Bei einer elastischen Form, wie beispielsweise einem Elastomer, passt sich dieses flexibel an komplexe Geometrien an und drückt das Material gleichmäßig gegen die Form. Dies minimiert vorteilhafterweise Spannungen im Material des Fahrzeugrads. Ferner muss die Matrize (Formwerkzeug) nur einseitig gefertigt werden, da das elastische Medium von der anderen Seite den Druck ausübt. Dies senkt vorteilhafterweise die Werkzeugkosten erheblich. Das Formen von Fahrzeugrädern mittels flüssigen oder elastischen Wirkmedien bietet daher Vorteile wie gleichmäßige Druckverteilung, Materialschonung, die Möglichkeit zur Fertigung komplexer Geometrien und reduzierte Werkzeugkosten.

Es ist ferner denkbar, dass ein Durchmesser im Bereich eines Übergangs von dem Schüsselsegment und dem Felgensegment im Wesentlichen einem vorgegebenen Enddurchmesser des Schüsselsegments entspricht, und wobei das Verfahren weiter umfasst:
- Ausformen eines Übergangsbereichs auf Basis eines Flow-Forming-Verfahrens, wobei der Übergangsbereich zwischen einer Radanlagefläche des Schüsselsegments und der äußeren Felgenschulter, vorzugsweise dem äußeren Felgenhorn, des Felgensegments angeordnet ist.

Die hat den Vorteil, dass der Übergangsbereich flexibel anpassbar bezüglich Materialdicke und Design ausgebildet werden kann. Ferner ermöglicht dies, dass das einstückige Fahrzeugrad eine kontinuierlich verlaufende Kontur im Übergangsbereich des Fahrzeugrads aufweist, die sowohl den Anforderungen an die Aerodynamik als auch an die Funktionalität des Rades entspricht, wie es für Personenkraftwagen oder für Nutzfahrzeuge erforderlich ist.

Beispielsweise kann vorgesehen sein, dass das Verfahren weiter umfasst:
- Einlegen des Topfes in ein Werkzeug, welches eine erste Matrize und eine zweite Matrize umfasst,
- Reduzieren eines Durchmessers des Felgensegments mittels der zweiten Matrize.

Dies ermöglicht es, dass eine gewünschte Form des herzustellenden Felgensegments bereitgestellt werden kann, um den vorgegebenen Anforderungen des Standards zu genügen. Ferner können dabei vorteilhafterweise Felgendurchmesser bereitgestellt werden, wie sie beispielsweise für einen Personenkraftwagen oder ein Nutzfahrzeug erforderlich ist.

Eine Matrize für die Felgenherstellung ist typischerweise als ein massives, präzise gefertigtes Werkzeug aus hochfestem Stahl zu verstehen. Sie weist eine hohlzylindrische Form auf, deren Innenkontur exakt der gewünschten Außenform der Felge entspricht. Die Oberfläche der Matrize ist glatt und poliert, um eine hochwertige Oberflächenqualität der produzierten Felge zu gewährleisten.

Außerdem ist es von Vorteil, wenn das Profilieren des Schüsselsegments und/oder des Felgensegments auf Basis einer Kombination von einem Außenhochdruckumformungs- und Flow-Forming-Verfahren ausgeführt wird.

Bei der Außenhochdruckumformung (AHU) werden das Schüssel- und/oder Felgensegment so um- bzw. ausgeformt, dass sie eine kontinuierlich verlaufende Kontur des Fahrzeugrads bilden. AHU wird bereits in der Automobilindustrie für Karosserieteile verwendet, und zwar dort wo exakte Außenkonturen benötigt werden, um aerodynamische oder ästhetische Anforderungen zu erfüllen. Es kann aber allein oder in Kombination mit anderen Verfahren bei der Herstellung eines einstückigen Fahrzeugrads effektiv für die präzise Ausformung von einzelnen Bereichen des Schüssel- und/oder Felgensegments angewendet werden

Es ist ferner denkbar, dass das Verfahren weiter umfasst:
- Anwenden eines Abstreckprozesses auf die Vorform, insbesondere auf eine Bandage aus metallischem Material, um eine Dicke des Materials der Vorform abschnittsweise zu reduzieren und resultierend eine Breite der Vorform, insbesondere der Bandage aus metallischem Material zu erhöhen, wodurch spezifische Abschnitte des Felgensegments, vorzugsweise ein inneres und/oder ein äußeres Felgenhorn, verstärkt werden,
- Profilieren des abgestreckten Materials des Felgensegments unter Anwendung eines Flow-Forming-Verfahrens, um die erforderliche Materialgüte und die Endform des Profils des Felgensegments auszubilden.

Das Abstrecken ermöglicht es, dass die Vorform aus metallischen Material, beispielsweise eine Stahlbandage, durch mechanische Kräfte in die gewünschte Form oder Dimension gestreckt wird. Dies beeinflusst vorteilhafterweise die Materialeigenschaften und die Geometrie der Vorform positiv.

Außerdem kann es im Rahmen der Erfindung von Vorteil sein, dass das Verfahren zumindest einen der nachfolgenden Schritte weiter umfasst:
- Ausschneiden wenigstens einer Öffnung im Bereich des Schüsselsegments mittels eines Stanzverfahrens, eines Laserschneide-, Plasma-, oder Wasserstrahlschneidverfahrens,
- Ausschneiden von wenigstens drei Öffnungen im Bereich des Schüsselsegments mittels eines Stanzverfahrens, eines Laserschneide-, Plasma-, oder Wasserstrahlschneidverfahrens, wobei jede Öffnung eine identische Form aufweist und/oder wobei die wenigstens drei Öffnungen in einem gleichen Abstand zueinander im Bereich des Schüsselsegments angeordnet sind.

Dies ermöglicht es, dass beispielsweise beim Stanzen Öffnungen z. B. mithilfe eines Stempels und einer Matrize mechanisch aus dem Material herausgeschnitten werden. Dies hat den Vorteil, dass die so bearbeiteten Schüsselsegmente des Fahrzeugrads saubere und exakte Schnittkanten aufweisen. Ferner kann dieser Verfahrensschritt vorteilhafterweise leicht mit anderen Umformprozessen in einer Produktionslinie integriert werden. Während z.B. einer Umformung des Schüsselsegments z. B. beim Tiefziehen oder Flow-Forming können Öffnungen durch vorher eingelegte Präge- oder Ausstanzwerkzeuge hergestellt werden, was die Anzahl der separaten Fertigungsschritte reduziert. Bei einem Laserschneide, Plasma-, oder Wasserstrahlschneidverfahren können genauso schnell und effizient präzise Öffnungen erzeugt werden. Dies ist besonders vorteilhaft bei einer Herstellung von komplexen oder filigranen Designs von Fahrzeugrädern. Ferner hat dies Verfahren den Vorteil, dass eine Belastung des Materials des Fahrzeugrads minimiert wird dass Risse oder Verformungen verhindert werden können.

Weiter ist im Rahmen der Erfindung denkbar, dass das Verfahren weiter umfasst:
- Profilieren des Schüsselsegments, insbesondere des Übergangsbereichs und der Radanlagefläche derart, dass ein außenseitiger, geschlossener Konturenverlauf bereitgestellt ist.

Dies ermöglicht es, dass der Konturenverlauf des Schüsselsegments des Fahrzeugrads die vorteilhaften aerodynamischen Eigenschaften wie die einer entsprechenden separaten Radabdeckung gewährleistet. Ferner ermöglicht der Konturenverlauf des Fahrzeugrads von der Radanlagefläche bis zum äußeren Felgenhorn eine Materialeinsparung beim Fahrzeugrad zu bewirken, die sich günstig auf den CO₂-Fussabdruck des Produktes auswirkt.

Es kann von Vorteil sein, wenn im Rahmen der Erfindung das Verfahren weiter umfasst:
- Profilieren des Schüsselsegments, insbesondere des Übergangsbereichs, derart, dass ein Übergangselement des Übergangsbereichs bezogen auf eine zentrale Achse des Fahrzeugrads eine Ausrichtung aufweist, welche axial von außen nach innen, axial von innen nach außen oder im Wesentlichen senkrecht zur zentralen Achse des Fahrzeugrads gerichtet ist.

Dies hat den Vorteil, dass ein Fahrzeugrad auf Basis des Herstellungsprinzips flexibel auf verschiedene Fahrzeugradtypen mit geeigneter Einpresstiefe angewendet werden kann. Als Einpresstiefe versteht man den axialen Abstand zwischen der inneren Anlagefläche des Rades und der Mitte der Felgenkontur. Ferner kann damit für verschiedene Fahrzeuge wie beispielsweise ein Personenkraftwagen (Pkw), ein Nutzfahrzeug, ein Lastkraftwagen (Lkw) oder ein Anhänger das benötigte Fahrzeugrad mit einer entsprechenden Ausrichtung des Übergangselements des Schüsselsegments bereitgestellt werden

Es ist weiter denkbar, dass das Verfahren weiter umfasst:
- Kalibrieren eines Durchmessers des Felgensegments in Abhängigkeit der Materialgüte.

Dies ermöglicht es, dass eine gleichmäßige und präzise Einhaltung der vorgesehenen Durchmesser garantiert wird. Ferner minimiert dies Abweichungen und gewährleistet eine optimale Passform des Fahrzeugrads. Ferner ermöglicht dies, dass der Kalibrierprozess kleine Oberflächenunregelmäßigkeiten im Bereich des Felgensegments glättet, die während des Herstellungsprozesses entstehen können.

Nach einer weiteren Möglichkeit kann vorgesehen sein, dass nach dem Formen des Topfes der Durchmesser des Felgensegments einem vorgegebenen Durchmesser eines Felgentiefbetts des Fahrzeugrads entspricht, und
wobei das das Profilieren weiter umfasst:
- Ausformen eines Übergangsbereiches zwischen dem Schüsselsegment und dem Felgensegment des Fahrzeugrads mittels rotierenden Profilrollen,
wobei danach dem Ausformen des Übergangsbereiches das Schüsselsegment eine kreisförmige Geometrie aufweist.

Dies hat den Vorteil, dass das einstückige Fahrzeugrad eine kontinuierlich verlaufende Kontur im Übergangsbereich des Fahrzeugrads aufweist, die sowohl den Anforderungen an die Aerodynamik als auch an die Funktionalität des Rades entspricht, wie es für Personenkraftwagen oder für Nutzfahrzeuge erforderlich ist. Ferner wird das Ausformen des Übergangsbereichs mittels der Profilrollen weiter verbessert, da die Kontur des Fahrzeugrads im Übergangsbereich präziser und schneller hergestellt werden kann. Ferner hat dies den Vorteil, dass der Übergangsbereich durch eine spezielle Oberflächengestaltung der Kontur so optimiert werden kann, dass die Aerodynamik verbessert wird.

Es kann weiter vorgesehen sein, dass das Profilieren des Felgensegments weiter mindestens einen der nachfolgende Schritte umfasst:
- Durchführen eines weiteren Profilierschritts mittels der rotierenden Profilrollen, um ein konisches Ende an einer offenen Seite des Topfes bereitzustellen,
- Durchführen von mehreren weiteren Profilierschritten unter Verwendung der rotierenden Profilrollen, derart, dass ein Material des Felgensegments während der mehreren Profilierschritte nur von der offenen Seite des Topfes in Richtung des Übergangsbereiches nachfließt, um die vorgegebene Felgenkontur umzuformen.

Dies ermöglicht es, dass eine gewünschte Form und Materialgüte des herzustellenden Felgensegments bereitgestellt werden kann, um den vorgegebenen Anforderungen des Standards zu genügen. Ferner können dabei vorteilhafterweise Felgendurchmesser bereitgestellt werden, wie sie beispielsweise für einen Personenkraftwagen oder ein Nutzfahrzeug erforderlich ist. Ferner kann die gewünschte Felgenkontur vorteilhafterweise so auf eine oder mehrere Profilerumformungen aufgeteilt werden, dass eine gleichmäßige Umformung während des erfindungsgemäßen Verfahrens erfolgt, welches das Felgenmaterial nur von der offenen Topfseite nachfließen lässt. So kann bei Durchführen eines mehrstufigen Profilierprozesses im ersten Profilierschritt der Übergangsbereich zwischen dem Schüsselsegment und dem Felgensegment ausgeformt werden und in den folgenden Profilierschritten kann so das Schüsselsegment quasi entkoppelt werden bei den nachfolgenden weiteren Profilierschritten für das Umformen des Felgensegments.

Ebenfalls Gegenstand der Erfindung ist ein Fahrzeugrad für ein Fahrzeug, insbesondere für einen Personenkraftwagen oder für ein Nutzfahrzeug, welches gemäß dem erfindungsgemäßen Verfahren hergestellt ist. Damit bringt das erfindungsgemäße Fahrzeugrad die gleichen Vorteile mit sich, wie sie ausführlich mit Bezug auf erfindungsgemäße Verfahren beschrieben wurden.

Ebenfalls Gegenstand der Erfindung ist eine Vorrichtung zur Herstellung eines Fahrzeugrads, wobei die Vorrichtung Mittel umfasst, die dazu ausgebildet sind, das erfindungsgemäße Verfahren auszuführen. Damit bringt die erfindungsgemäße Vorrichtung die gleichen Vorteile mit sich, wie sie ausführlich mit Bezug auf das erfindungsgemäße Verfahren beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens gemäß Ausführungsbeispielen der Erfindung,
- Fig. 2: eine schematische Darstellung eines Prozesses gemäß Ausführungsbeispielen der Erfindung,
- Fig. 3: eine weitere schematische Darstellung eines Teil-Prozesses gemäß Ausführungsbeispielen der Erfindung,
- Fig. 4: eine weitere schematische Darstellung eines Teil-Prozesses gemäß Ausführungsbeispielen der Erfindung,
- Fig. 5: eine weitere schematische Darstellung eines Teil-Prozesses gemäß Ausführungsbeispielen der Erfindung, und
- Fig. 6: eine schematische Darstellung eines Fahrzeugrads gemäß Ausführungsbeispielen der Erfindung.

**In** den nachfolgenden Figuren werden für die gleichen technischen Merkmale auch von unterschiedlichen Ausführungsbeispielen die identischen Bezugszeichen verwendet.

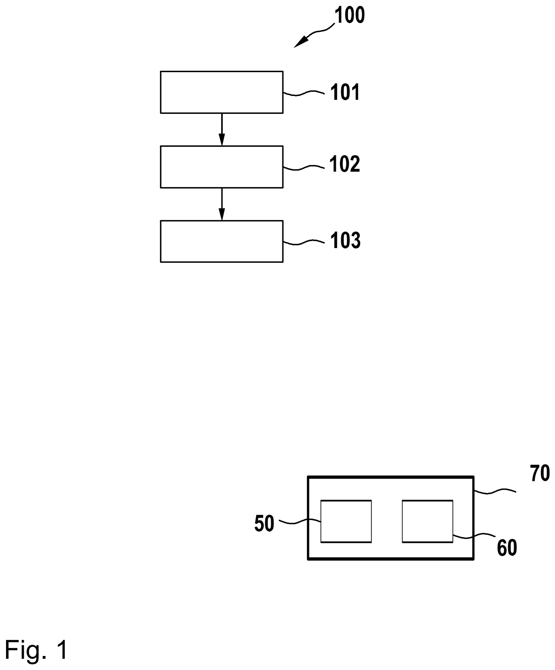

Fig. 1 zeigt eine schematische Visualisierung eines Verfahrens gemäß Ausführungsbeispielen der Erfindung. Insbesondere zeigt Fig. 1 ein Verfahren 100 zum Herstellen eines einstückigen Fahrzeugrads 1, wobei das Fahrzeugrad 1 ein Schüsselsegment 2 und ein Felgensegment 3 aufweist. Das Verfahren 100 umfasst in einem Schritt 101 ein Bereitstellen einer einstückigen Vorform 4 aus metallischen Material, insbesondere einer Ronde 4 aus metallischen Material oder einer Bandage 4 aus metallischen Material, wobei das metallische Material durch eine Materialgüte und/oder eine Materialdicke spezifiziert ist. **In** einem Schritt 102 wird ein Topf 5 aus der bereitgestellten einstückigen Vorform 4 geformt, wobei der Topf 5 das Schüsselsegment 2 und das Felgensegment 3 umfasst. **In** einem Schritt 103 wird das Schüsselsegment 2 und/oder das Felgensegment 3 des einstückigen Fahrzeugrads 1 hinsichtlich einer jeweiligen Materialdicke in verschiedenen Bereichen der jeweiligen Segmente 2,3 auf Basis eines Kaltumformungsverfahrens profiliert, insbesondere auf Basis eines Flow-Forming-Verfahrens.

Ferner zeigt Fig. 1 eine Vorrichtung 70 zum Herstellen eines einstückigen Fahrzeugrads 1, umfassend Mittel, insbesondere Werkzeuge 50, 60 die dazu ausgebildet sind, das erfindungsgemäße Verfahren 100 auszuführen.

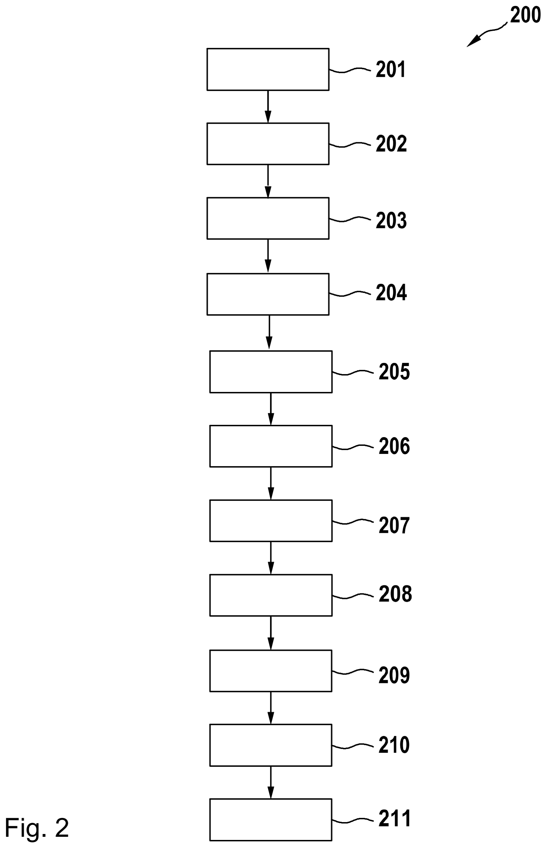

Fig. 2 stellt eine schematische Darstellung eines Prozesses gemäß Ausführungsbeispielen der Erfindung dar. Insbesondere zeigt Fig. 2 einen beispielhaften Prozessablauf für eine Herstellung eines einstückigen Fahrzeugrads. Die Herstellung des einstückigen Fahrzeugrads 1 durchläuft einen mehrstufigen Prozess, der verschiedene Techniken und Verfahren umfasst, um die endgültige Form und Struktur des Fahrzeugrads 1 zu erreichen. Im Folgenden wird ein beispielhafter Prozessablauf detailliert beschrieben:
Der Schritt 201 kann beispielsweise darin bestehen, ein Metallband bzw. eine Bandage von einer bereitgestellten Rolle aus Metall abzuwickeln. Das Metall kann beispielsweise eine hochwertige Stahllegierung eines beliebigen Typs oder ein Aluminium sein. Nach dem Abwickeln in Schritt 201 kann die Bandage gemäß den weiteren Schritten 202, 203 weiterbearbeitet bzw. angepasst werden, wobei das Anpassen ein Richten der Bandage beispielsweise ein Begradigen der Oberfläche und ein Entgraten der Kanten des Metallbandes umfassen kann. Anschließend wird in Schritt 204 das so bearbeitete Metallband dann auf die benötigte Länge geschnitten, entsprechend der Größe der zu produzierenden Felge. Das zugeschnittene Material, d.h. die zugeschnittene Bandage, insbesondere Stahlbandage, wird

in Schritt 205 zu einer kreisförmigen bzw. zylinderförmigen Form gebogen, die die einteilige Vorform für das herzustellende Fahrzeug bildet. In Schritt 206 können die Enden der so gebogenen Stahlbandage an den stumpfen Enden zusammengeschweißt werden, um einen geschlossenen Ring zu bilden. Nach dem Schweißen wird in Schritt 207 die Oberfläche der Felge z. B. geglättet, um Unregelmäßigkeiten zu entfernen, wie beispielsweise an der Schweißnaht. Die kreisförmig gebogene Stahlbandage wird für den Abstreckprozess in Schritt 208 zwischen die Abstreckwerkzeuge eingelegt. Für den Abstreckprozess werden spezielle Werkzeuge (z.B.: Drückrollen) verwendet, die so konfiguriert sind, dass sie die Dicke der Stahlbandage lokal gezielt reduzieren können. Das durch die Drückrollen verdrängte Material lässt die Bandage in axialer Richtung in Ihrer Breite wachsen. Durch ein Fließdrückverfahren in Schritt 209 wird das Material der Felge unter Druck weiter abschnittsweise verformt, um resultierend die Festigkeit zu erhöhen und das Gewicht zu reduzieren. Ferner wird in diesem Schritt ein gewünschter Durchmesser der Felge 2 derart bereitgestellt, dass dieser einem Durchmesser eines vorgegebenen Felgentiefbetts des Fahrzeugrads 1 entspricht. Dabei entsteht eine Form, insbesondere ein sogenannter Topf 5, welcher eine offene Seite aufweist.

Der nächste Bearbeitungsschritt 210 umfasst ein Profilier- und Kalibrierverfahren, bei dem mit mehreren, beispielsweise bis zu 3 (drei), Bearbeitungsschritten schrittweise das Felgenprofil der Felge 2 abschnittsweise bzw. lokal geformt wird, um die endgültige Kontur zu erreichen. Das Profilieren kann während des Bearbeitungsschritts 210, welcher mehrere Profilierschritte, aufweisen kann, weiter ein Ausformen 210a eines Übergangsbereiches 40 zwischen der Schüssel 2 bzw. dem Schüsselsegment 2 und der Felge 3 bzw. dem Felgensegment 3 des Fahrzeugrads 1 mittels rotierenden Profilrollen umfassen, wobei nach dem Ausformen des Übergangsbereiches 40 das Schüsselsegment 2 eine kreisförmige Geometrie aufweist. Beispielsweise kann das Profilieren des Felgensegments 3 in Schritt 210 weiter mindestens einen der nachfolgende Schritte 210b, c umfassen:
- Durchführen 210b eines weiteren Profilierschritts mittels der rotierenden Profilrollen, um ein konisches Ende an einer offenen Seite des Topfes bereitzustellen,
- Durchführen 210c von mehreren weiteren Profilierschritten unter Verwendung der rotierenden Profilrollen, derart, dass ein Material des Felgensegments während der mehreren Profilierschritte nur von der offenen Seite des Topfes in Richtung des Übergangsbereiches nachfließt, um die vorgegebene Felgenkontur umzuformen.

Der Übergangsbereich 40 umfasst beispielsweise ein Übergangselement 11, ein äußeres Felgenhorn 12 und eine äußere Felgenschulter 14 des Fahrzeugrads 1. Die jeweiligen Elemente 11, 12, 14 des Übergangsbereichs 40 werden mit anderen Worten durch die vorgenannten Profilierschritte des Bearbeitungsschritts 210 ausgeformt.

Dann kann in Schritt 211 das Loch in dem Felgensegment 3 für das Ventil gestanzt werden. Abschließend können dann die Maße des fertiggestellten Felgensegments 3 kontrolliert werden (nicht abgebildet).

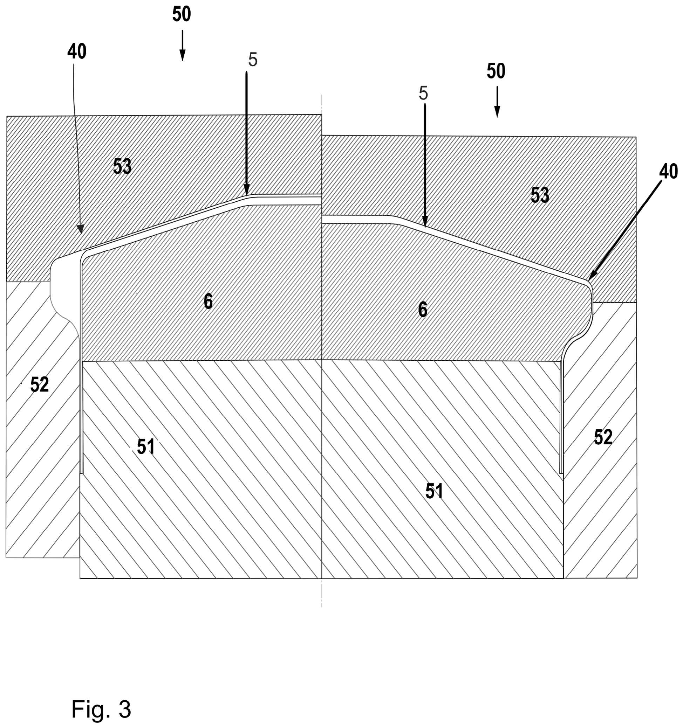

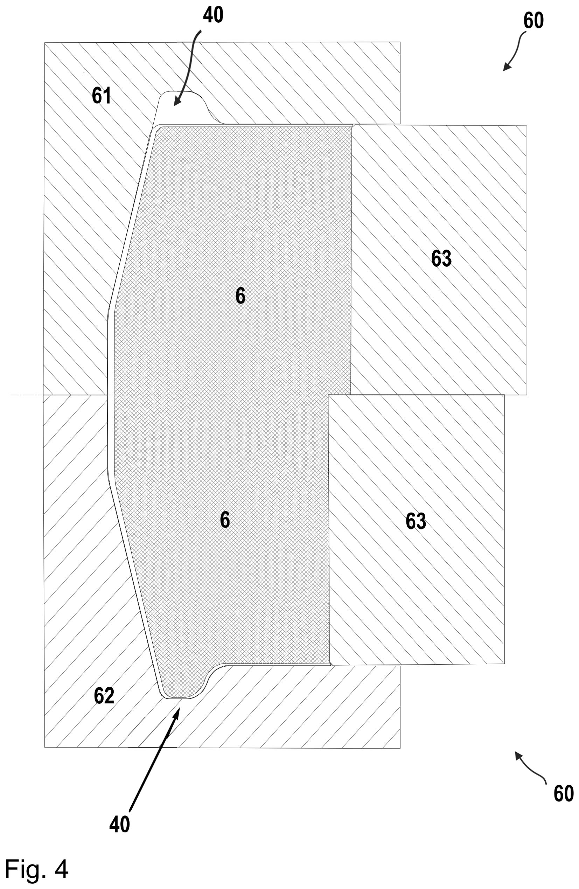

Fig. 3 zeigt eine schematische Darstellung eines Teil-Prozesses gemäß Ausführungsbeispielen der Erfindung. Insbesondere wird in der Fig. 3 ein Teil des Herstellungsprozesses des Fahrzeugrads 1 dargestellt, welcher das Ausformen des Topfes 5 mittels eines Wirkmediums 6 in einem vertikal geteilten Werkzeug 50 zeigt. Die linke Hälfte der Fig. 4 zeigt die zeitliche Phase vor dem Ausformen und die rechte Hälfte der Fig. 4 zeigt die zeitliche Phase nach dem Ausformen des Übergangsbereichs 40 des Fahrzeugrads 1.

Der Topf 5 kann in das Werkzeug 50 eingelegt werden für ein weiteres Ausformen der jeweiligen Segmente 2, 3 des Fahrzeugrads 1 bzw. des Topfs 5 und grenzt oben an eine Matrize 53. Die Matrize 53 bildet eine Negativform für das gewünschte Fahrzeugrad 1. Der Übergangsbereich 40 kann dabei als ein Bereich des Fahrzeugrads spezifiziert sein, welcher zwischen einer Radanlagefläche des Schüsselsegments 2 und einer äußeren Felgenschulter des Felgensegments 3, vorzugsweise einem äußeren Felgenhorn 12, angeordnet ist, um eine einteilige, kontinuierlich verlaufende Kontur des Fahrzeugrads 1 auszubilden. Das heißt, dass z.B. die Matrize des geteilten Werkzeugs 50 als eine Negativform für das Ausformen des Übergangsbereichs 40 vorgesehen ist.

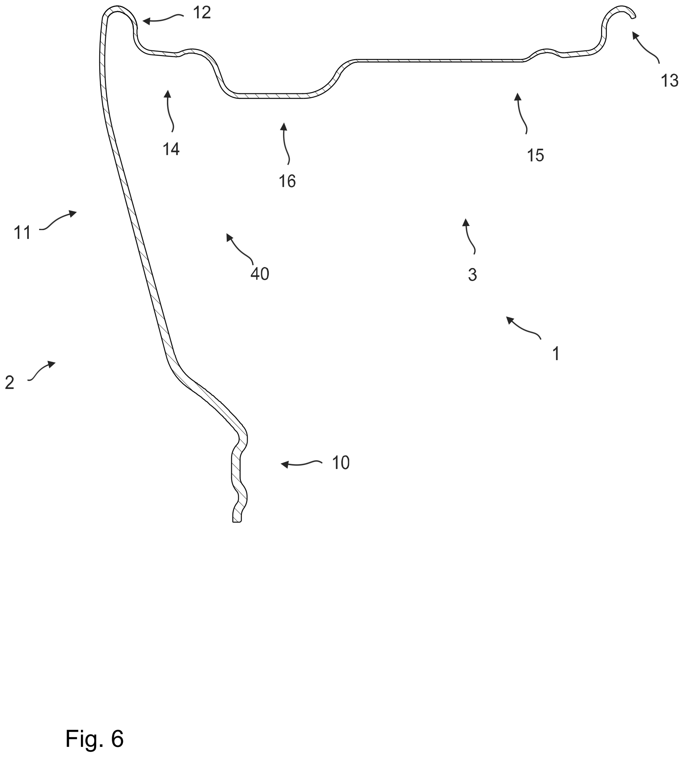

Der Durchmesser des Felgensegments 3 des Topfs 5 wie in Fig. 3 dargestellt kann einem vorgegebenen Durchmesser eines Felgentiefbetts 16 des Fahrzeugrads 1 (siehe auch Fig. 6) entsprechen. Beim Ausformen des Übergangsbereichs 40 wird in dem Werkzeug 50 das Wirkmedium 6 in Abhängigkeit eines kontrolliert erzeugten Drucks so gegen die Negativform 53 des Werkzeugs gedrückt, dass der Übergangsbereich 40 auf Basis einer vorgegebenen Spezifikation einer Kontur des Fahrzeugrads 1 ausgebildet wird, um eine einteilige, kontinuierlich verlaufende Kontur des Fahrzeugrads 1 auszubilden.

Ferner kann beim Ausformen des Übergangsbereichs 40 in dem vertikal geteilten Werkzeug 50 das Wirkmedium 6 in Abhängigkeit des kontrolliert erzeugten Drucks so in horizontaler Richtung beidseitig gedrängt wird, dass der Übergangsbereich 40 des Topfs 5 gegen die Negativform der Matrize 53 gedrückt wird. Dabei kann optional ein Nachführen des Wirkmediums 6 zur Unterstützung des Ausformens des Übergangsbereichs 40 vorgesehen sein. Ferner kann beispielsweise auch ein Abstützen des offenen Endes des Felgensegments 3 bzw. Topfs 5 ausgeführt werden, um ein Ausknicken oder Aufbauchen des Felgensegments 3 des Topfs 5 zu vermeiden.

Fig. 4 zeigt eine weitere schematische Darstellung eines Teil-Prozesses gemäß Ausführungsbeispielen der Erfindung. Insbesondere wird in der Fig. 4 ein Teil des Herstellungsprozesses des Fahrzeugrads 1 dargestellt, welcher das Ausformen des Topfes 5 mittels eines Wirkmediums 6 in einem horizontal geteilten Werkzeug 50 abbildet. Die obere Hälfte der Fig. 4 zeigt die zeitliche Phase vor dem Ausformen und die untere Hälfte der Fig. 4 zeigt die zeitliche Phase nach dem Ausformen des Übergangsbereichs 40 des Fahrzeugrads 1.

Der in das horizontal geteilte Werkzeug 60 eingelegte Topf 5 kann mit einem Wirkmedium 6 wie z.B. einer flüssigen Form 6 oder einem flüssigem Medium 6 für das Ausformen befüllt werden. Das flüssige Wirkmedium 6 kann beispielsweise eine Flüssigkeit wie Wasser oder Öl sein. Dann kann der Topf 5 an seinem offenen Ende (Felgensegment 3) mittels einer Verschlussvorrichtung 63 wie z.B. einem Schließzylinder 63 verschlossen werden, Durch ein Ausüben eines kontrolliert erzeugten Drucks auf das Wirkmedium 6 mittels einer Druckvorrichtung auf die Verschlussvorrichtung 63, kann die Flüssigkeit 6 als Wirkmedium gegen den Übergangsbereich 40 drücken und so diesen Bereich 40 in die Negativform des Ober- und Unterwerkzeugs 61, 62 zu drücken, um den Übergangsbereich 40 auszubilden wie beispielsweise in der unteren Hälfte der Fig 4 abgebildet. Ein Nachführen der Verschlussvorrichtung 63 in Abhängigkeit einer Ausbreitung des Wirkmediums 6 durch den kontrolliert erzeugten Drucks auf das Wirkmedium 6 ermöglicht den präzisen Ausformungsprozess des Übergangsbereichs 40.

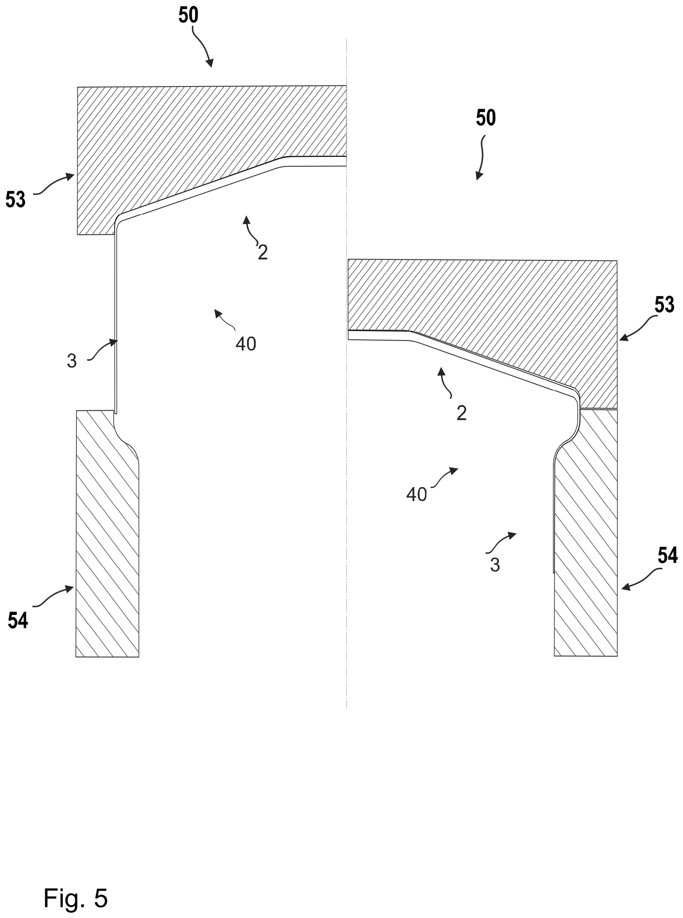

Fig. 5 zeigt eine weitere schematische Darstellung eines Teil-Prozesses gemäß Ausführungsbeispielen der Erfindung. Insbesondere wird in der Fig. 5 ein Teil des Herstellungsprozesses des Fahrzeugrads 1 dargestellt, welcher das Verjüngen des Felgensegments 3 des Topfes 5 in einem horizontal geteilten Werkzeug 50 abbildet. Die linke Hälfte der Fig. 5 zeigt exemplarisch die zeitliche Phase vor dem Reduzieren des Durchmessers des Felgensegments 3 bzw. dessen Verjüngen. Die rechte Hälfte der Fig. 5 zeigt die zeitliche Phase nach dem Verjüngen des Übergangsbereichs 40 des Fahrzeugrads 1.

Es kann bei der Bearbeitung des Topfs 5 z. B. so vorgesehen sein, dass ein Durchmesser im Bereich eines Übergangs von dem Schüsselsegment 2 und dem Felgensegment 3 im Wesentlichen einem vorgegebenen Enddurchmesser des Schüsselsegments 2 entspricht wie in der linken Hälfte der Fig. 5 dargestellt.

Das Ausformen des Übergangsbereichs 40 kann beispielsweise auf Basis eines Flow-Forming-Verfahrens erfolgen, wobei der Übergangsbereich 40 zwischen einer Radanlagefläche 10 des Schüsselsegments 2 und der äußeren Felgenschulter 14 des Felgensegments 3, vorzugsweise des äußeren Felgenhorns 12, angeordnet ist, um eine einteilige, kontinuierlich verlaufende Kontur des Fahrzeugrads auszubilden.

Beispielsweise kann der Topf 5 zunächst in eine Matrize 54 des vertikal geteilten Werkzeugs 50 eingelegt werden. Dann kann optional z.B. das Felgensegment 3 (und/oder das Schüsselsegment 2) mittels einer jeweils verwendeten Matrize 54 oder alternativ mittels eines anderen Werkzeugs 54 so geformt werden, dass der Durchmesser des Felgensegments 3 reduziert bzw. verjüngt wird.

Fig. 6 zeigt eine schematische Skizze eines Profils eines Fahrzeugrads gemäß Ausführungsbeispielen der Erfindung. Fig. 6 stellt insbesondere einen schematischen Querschnitt eines erfindungsgemäßen Fahrzeugrads dar, beispielsweise für einen Personenkraftwagen, für ein Nutzfahrzeug wie beispielsweise einen Stadtlieferwagen oder Kastenwagen oder für einen Anhänger. Das Fahrzeugrad 1 umfasst ein Schüsselsegment 2 und ein Felgensegment 3. Ein Übergangsbereich 40 ist zwischen einer Radanlagefläche 10 des Schüsselsegments 2 und einer äußeren Felgenschulter 14 des Felgensegments 3, vorzugsweise einem äußeren Felgenhorn 12 des Felgensegments 3, angeordnet. Der Übergangsbereich 40 umfasst wie in Fig. 6 dargestellt das Übergangselement 11, das äußere Felgenhorn 12 und die äußere Felgenschulter 14.

Das Schüsselsegment 2 umfasst eine Radanlagefläche 10 zur Verbindung des Rades 1 mit einer Fahrzeugnabe (Nabe nicht abgebildet) und ein Übergangselement 11, wobei das Übergangselement zwischen der Radanlagefläche 10 und dem äußeren Felgenhorn 12 angeordnet ist. Ein Übergangsbereich 40 umfasst einen Bereich zwischen der Radanlagefläche 10 und der äußeren Felgenschulter 14, d.h. dieser Bereich 40 umfasst z.B. ein Übergangselement 11 sowie ein äußeres Felgenhorn 12 und die äußere Felgenschulter 14. Das Übergangselement 11 des Schüsselsegments 2 ist direkt an dem äußeren Felgenhorn 12 des Felgensegments 3 angeordnet bzw. mit diesem einstückig verbunden. Das Übergangselement 11 gemäß Fig. 6 ist bezogen auf eine zentrale Achse des Fahrzeugrads 1 mit einer Ausrichtung abgebildet, welche axial von außen nach innen gerichtet ist. Das in Fig. 6 abgebildete Radprofil kann zum Beispiel für einen Personenkraftwagen geeignet sein. Alternativ können auch weitere Ausrichtungen für das Übergangselement 11 bezogen auf die zentrale Achse des Fahrzeugrads wie beispielsweise axial von innen nach außen oder im Wesentlichen senkrecht zur zentralen Achse des Fahrzeugrads 1 vorgesehen sein. Das Übergangselement 11 und das äußere Felgenhorn 12 sind als ein umlaufender, schweißnahtfreier Materialabschnitt des Fahrzeugrads 1 ausgebildet.

Das Felgensegment 3 kann z. B. als eine Tiefbettfelge 3 vorgesehen sein, welche beispielsweise als eine 5°- oder eine 15°-Steilschulterfelge ausgebildet sein kann. Das Felgensegment 3 kann ferner symmetrisch ausgebildet sein. Das Profil des Felgensegments 3 kann unterschiedliche Abschnitte umfassen. Das Felgensegment 3 umfasst gemäß dem Ausführungsbeispiel in Fig. 6 ein äußeres und ein inneres Felgenhorn 12, 13 sowie eine äußere Felgenschulter 14 und eine innere Felgenschulter 15. Zwischen den beiden Felgenschultern 14, 15 ist ein Tiefbett 16 ausgebildet, das einen Tiefbettboden umfassen kann. Optional ist es möglich, dass sogenannte Humps zwischen den Felgenschultern 14, 15 und dem Tiefbett 16 angeordnet sein können.

Ferner kann das Übergangselement 11 eine Aussparung zur Ventildurchführung für ein Ventil aufweisen oder Belüftungslöcher, umfassen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeugrad
- 2: Schüsselsegment
- 3: Felgensegment
- 4: Vorform, Ronde, Bandage
- 5: Topf
- 6: Wirkmedium

- 10: Radanlagefläche
- 11: Übergangselement
- 12: Äußeres Felgenhorn
- 13: Inneres Felgenhorn
- 14: Äußere Felgenschulter
- 15: Innere Felgenschulter
- 16: Felgentiefbett

- 40: Übergangsbereich

- 50: Werkzeug, vertikal geteilt
- 51: Unterteil des Werkzeugs
- 52: Stützring
- 53: Matrize
- 54: weitere Matrize, weiteres Werkzeug

- 60: Werkzeug, horizontal geteilt
- 61: Oberwerkzeug
- 62: Unterwerkzeug
- 63: Verschlussvorrichtung, Schließzylinder
- 70: Vorrichtung zum Herstellen

- 100: Verfahren
- 101: Bereitstellen
- 102: Formen
- 103: Profilieren

## Patentansprüche

1. Verfahren (100) zum Herstellen eines einstückigen Fahrzeugrads (1), wobei das Fahrzeugrad (1) ein Schüsselsegment (2) und ein Felgensegment (3) aufweist, und wobei das Verfahren (100) umfasst:
- Bereitstellen (101) einer einstückigen Vorform (4) aus metallischen Material, insbesondere einer Ronde (4) aus metallischen Material oder einer Bandage (4) aus metallischen Material, wobei das metallische Material durch eine Materialgüte und/oder eine Materialdicke spezifiziert ist,
- Formen (102) eines Topfes (5) aus der bereitgestellten einstückigen Vorform (4), wobei der Topf (5) das Schüsselsegment (2) und das Felgensegment (3) umfasst,
- Profilieren (103) des Schüsselsegments (2) und/oder des Felgensegments (3) des einstückigen Fahrzeugrads (1) hinsichtlich einer jeweiligen Materialdicke in verschiedenen Bereichen der jeweiligen Segmente (2,3) auf Basis eines Kaltumformungsverfahrens, insbesondere auf Basis eines Flow-Forming-Verfahrens.

2. Verfahren (100) nach Anspruch 1,
wobei nach dem Formen (102) des Topfes (5) der Durchmesser des Felgensegments (3) einem vorgegebenen Durchmesser eines Felgentiefbetts (16) des Fahrzeugrads (1) entspricht, und
wobei das Verfahren (100) weiter umfasst:
- Ausformen eines Übergangsbereichs (40) des Fahrzeugrads (1) mittels eines Wirkmediums (6) in einem Werkzeug (50, 60) zur Herstellung des Fahrzeugrads (1),
wobei das Wirkmedium (6) in Abhängigkeit eines kontrolliert erzeugten Drucks so gegen eine Negativform des Werkzeugs (50, 60) gedrückt wirkt, dass der Übergangsbereich (40) auf Basis einer vorgegebenen Spezifikation einer Kontur des Fahrzeugrads (1) ausgebildet wird,
wobei der Übergangsbereich (40) als ein Bereich des Fahrzeugrads (1) spezifiziert ist, welcher zwischen einer Radanlagefläche (10) des Schüsselsegments (2) und einer äußeren Felgenschulter (14) des Felgensegments (3) angeordnet ist.

3. Verfahren (100) nach Anspruch 2,
wobei das Verfahren (100) vor dem Ausformen des Übergangsbereichs (40) weiter umfasst:
- Einlegen des Topfes (5) in das Werkzeug (50, 60) für ein weiteres Ausformen der jeweiligen Segmente (2, 3) des Fahrzeugrads (1),
wobei das Werkzeug (50, 60) horizontal oder vertikal geteilt ist, und wobei das jeweilige geteilte Werkzeug (50, 60) als eine Negativform für das Ausformen des Übergangsbereichs (40) vorgesehen ist.

4. Verfahren (100) nach Anspruch 3,
wobei beim Ausformen des Übergangsbereichs (40) in dem vertikal geteilten Werkzeug (50), das Wirkmedium (6) in Abhängigkeit des kontrolliert erzeugten Drucks so in horizontaler Richtung beidseitig gedrängt wird, dass der Übergangsbereich (40) des Topfs (5) gegen die Negativform des vertikal geteilten Werkzeugs (50) gedrückt wird, und das Verfahren (100) wenigstens einen der nachfolgenden Schritte weiter umfasst:
- Nachführen des Wirkmediums (6) zur Unterstützung des Ausformens des Übergangsbereichs (40),
- Abstützen eines offenen Endes des Felgensegments (3), um ein Ausknicken oder Aufbauchen des Felgensegments (3) zu vermeiden.

5. Verfahren (100) nach Anspruch 2 und 3,
wobei das Verfahren (100) beim Ausformen des Übergangsbereichs (40) in dem horizontal geteilten Werkzeug (60) weiter umfasst:
- Befüllen des Topfes (5) mit dem Wirkmedium (6),
- Verschließen des Topfes (5) am offenen Ende des Felgensegments (3) mittels einer Verschlussvorrichtung (63),
- Ausüben des kontrolliert erzeugten Drucks auf das Wirkmedium (6) mittels einer Druckvorrichtung, um das Wirkmedium (6) gegen den Übergangsbereich (40) und diesen Bereich (40) in die Negativform des horizontal geteilten Werkzeugs (60) zu drücken,
- Nachführen der Verschlussvorrichtung (63) in Abhängigkeit einer Ausbreitung des Wirkmediums (6) durch den kontrolliert erzeugten Drucks auf das Wirkmedium (6).

6. Verfahren (100) nach einem der Ansprüche 2 bis 5,
wobei das Wirkmedium (6) eine flüssige Form und/oder eine elastische Form aufweist, wobei vorzugsweise die flüssige Form Wasser, und/oder vorzugsweise die elastische Form einen elastischen Kunststoff, insbesondere ein Elastomer, umfasst.

7. Verfahren (100) nach Anspruch 1,
wobei ein Durchmesser im Bereich eines Übergangs (11) von dem Schüsselsegment (2) und dem Felgensegment (3) im Wesentlichen einem vorgegebenen Enddurchmesser des Schüsselsegments (2) entspricht, und wobei das Verfahren (100) weiter umfasst:
- Ausformen eines Übergangsbereichs (40) auf Basis eines Flow-Forming-Verfahrens, wobei der Übergangsbereich (40) zwischen einer Radanlagefläche (10) des Schüsselsegments (2) und der äußeren Felgenschulter (14) des Felgensegments (3) angeordnet ist.

8. Verfahren (100) nach einem der vorhergehenden Ansprüche,
wobei das Verfahren (100) weiter umfasst:
- Einlegen des Topfes (5) in ein Werkzeug (50), welches eine erste Matrize (53) und eine zweite Matrize (54) umfasst,
- Reduzieren eines Durchmessers des Felgensegments (3) mittels der zweiten Matrize (54).

9. Verfahren (100) nach einem der vorhergehenden Ansprüche,
wobei das Profilieren (103) des Schüsselsegments (2) und/oder des Felgensegments (3) auf Basis einer Kombination von einem Außenhochdruckumformungs- und Flow-Forming-Verfahren ausgeführt wird.

10. Verfahren (100) nach einem der vorhergehenden Ansprüche,
wobei das Verfahren (100) weiter umfasst:
- Anwenden eines Abstreckprozesses auf die Vorform (4), insbesondere auf eine Bandage (4) aus metallischem Material, um eine Dicke des Materials der Vorform (4) abschnittsweise zu reduzieren und resultierend eine Breite der Vorform (4), insbesondere der Bandage (4) aus metallischem Material zu erhöhen, wodurch spezifische Abschnitte des Felgensegments (3), vorzugsweise ein inneres und/oder ein äußeres Felgenhorn (12, 13), verstärkt werden,
- Profilieren des abgestreckten Materials des Felgensegments (3) unter Anwendung eines Flow-Forming-Verfahrens, um die erforderliche Materialgüte und die Endform des Profils des Felgensegments (3) auszubilden.

11. Verfahren (100) nach einem der vorhergehenden Ansprüche,
wobei das Verfahren (100) zumindest einen der nachfolgenden Schritte weiter umfasst:
- Ausschneiden wenigstens einer Öffnung im Bereich des Schüsselsegments (2) mittels eines Stanzverfahrens, eines Laserschneide-, Plasma- oder Wasserstrahlschneidverfahrens,
- Ausschneiden von wenigstens drei Öffnungen im Bereich des Schüsselsegments (2) mittels eines Stanzverfahrens, eines Laserschneide-, Plasma-, oder Wasserstrahlschneidverfahrens, wobei jede Öffnung eine identische Form aufweist und/oder wobei die wenigstens drei Öffnungen in einem gleichen Abstand zueinander im Bereich des Schüsselsegments (2) angeordnet sind.

12. Verfahren (100) nach einem der vorhergehenden Ansprüche,
wobei das Verfahren (100) weiter wenigstens einen der nachfolgenden Schritte umfasst:
- Profilieren des Schüsselsegments (2), insbesondere des Übergangsbereichs (40) und der Radanlagefläche (10) derart, dass ein außenseitiger, geschlossener Konturenverlauf bereitgestellt ist,
- Profilieren des Schüsselsegments (2), insbesondere des Übergangsbereichs (40), derart, dass ein Übergangselement (11) des Übergangsbereichs (40) bezogen auf eine zentrale Achse des Fahrzeugrads (1) eine Ausrichtung aufweist, welche axial von außen nach innen, axial von innen nach außen oder im Wesentlichen senkrecht zur zentralen Achse des Fahrzeugrads (1) gerichtet ist.

13. Verfahren (100) nach Anspruch 1,
wobei nach dem Formen (102) des Topfes (5) der Durchmesser des Felgensegments (3) einem vorgegebenen Durchmesser eines Felgentiefbetts (16) des Fahrzeugrads (1) entspricht, und wobei das Verfahren (100) weiter umfasst:
- Ausformen eines Übergangsbereichs (40) zwischen dem Schüsselsegment (2) und dem Felgensegment (3) des Fahrzeugrads (1) mittels rotierenden Profilrollen, wobei während dem und nach dem Ausformen des Übergangsbereiches (40) das Schüsselsegment (2) eine kreisförmige Geometrie aufweist.

14. Verfahren (100) nach Anspruch 13,
wobei das Profilieren (103) des Felgensegments weiter mindestens einen der nachfolgende Schritte umfasst:
- Durchführen eines weiteren Profilierschritts mittels der rotierenden Profilrollen, um ein konisches Ende an einer offenen Seite des Topfes bereitzustellen,
- Durchführen von mehreren weiteren Profilierschritten unter Verwendung der rotierenden Profilrollen, derart, dass ein Material des Felgensegments während der mehreren Profilierschritte nur von der offenen Seite des Topfes in Richtung des Übergangsbereiches nachfließt, um die vorgegebene Felgenkontur umzuformen.

15. Vorrichtung (70) zur Herstellung eines Fahrzeugrads, wobei die Vorrichtung (70) Mittel umfasst, die dazu ausgebildet sind, das Verfahren nach einem der Ansprüche 1 bis 14 auszuführen.
